# EUROPEAN PATENT SPECIFICATION

(11) **EP 2 958 435 B1**
(45) Date of publication and mention of the grant of the patent: **01.11.2017**
(21) Application number: 14704601.5
(22) Date of filing: 17.02.2014
(51) Int. Cl.: A23C 9/15, A23C 3/033, B01F 5/06, B01F 1/00, B01F 15/02, B01F 15/06

(54) **PROCESS AND ASSEMBLY FOR RECOMBINING A FOOD PRODUCT**
VERFAHREN UND ANORDNUNG ZUR REKOMBINATION EINES NAHRUNGSMITTELPRODUKTS
PROCÉDÉ ET ENSEMBLE PERMETTANT DE RECOMBINER UN PRODUIT ALIMENTAIRE

(30) Priority: 19.02.2013 SE 1350200
(43) Date of publication of application: 30.12.2015
(73) Proprietor: Tetra Laval Holdings & Finance SA, 1009 Pully (CH)
(72) Inventor: OESTENGAARD, Svend Erik, 2000 Frederiksberg (DK)
(74) Representative: Tetra Pak - Patent Attorneys SE
(86) International application number: PCT/EP2014/053028
(87) International publication number: WO 2014/128083

(56) References cited:
- EP-A1- 0 799 573
- WO-A1-02/09528
- WO-A1-82/00240
- US-A- 4 096 586
- US-A- 4 349 576
- US-A- 5 209 157
- US-A1- 2002 045 660

## Description

### Field of the invention

The present invention relates to a process and an assembly for recombining a food product from mainly water, powder and potential other additives.

### Background of the invention

Recombination processes and assemblies have been in use for many years within the dairy industry. The main benefit of the recombination process is that e.g. dry milk solids are compact during transport and require no refrigeration. For this reason, this process is predominately used in regions with tropical climates and in regions where the distance between the producer and the consumers is great.

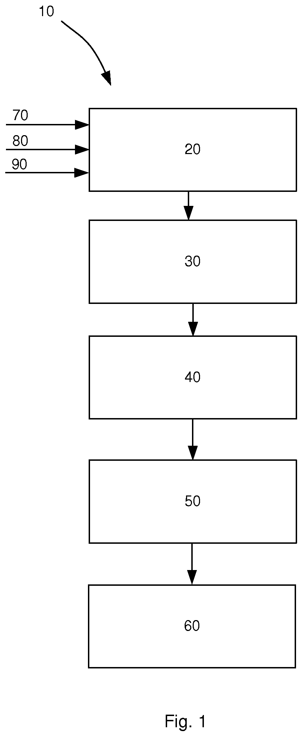

The normal recombination process 10 can be seen in Fig. 1. In a first mixing step 20, the dry ingredients 70, normally milk powder without fat content (0.02%), are mixed with warm (40-50 °C) water 80 under circulation in a mixing tank until the mixture reaches its final total solid content, and the milk fat 90 is added. The milk mixture is then held during a storing step 30, for hydrating the milk powder. The mixture is then normally pumped to a pasteurizer for a pasteurising step 40. In connection with the pasteurising step, the milk product is normally deaerated as well. The pasteurized milk product is thereafter brought to an additional tank for an intermediate storage step 50, in order to hydrate the milk powder and to release any air that was captured in the mixing stage. The milk is then brought to a UHT heat treatment unit in a UHT heat treatment step 60, and is subsequently pumped to an aseptic storage tank or to an aseptic filling machine (not shown), for being packaged.

This process is very energy consuming, since large volumes of product are heated and cooled. The accuracy of the standardised product can also vary from batch to batch. The above process further requires a very large floor space for the very large storage tanks that are involved.

Processes and apparatuses that may be used to recombine solid food products are known *_{eg}* from US4096586, US5209157 and US4349576.

### Summary of the invention

It is hence an object to mitigate at least some of the drawbacks of the prior art.

According to a first aspect it is provided a process for recombining a liquid food product, according to the appended claims. The slurry may comprise more than 30 percent by weight of food solids.

Fat and/or other additives may be added by in-line injection in connection with the blending step.

The process may further comprise a deaeration step prior to the blending step.

The mixing step may be performed in the presence of a vacuum, for simultaneous deaeration of the food product being mixed.

The mixing step may be carried out at a temperature of between 35 °C and 55 °C, and the storing step may be carried out at a temperature of between 40 °C and 60 °C.

The food solids may be skim milk powder.

According to a second aspect it is provided an assembly for recombining a food product according to the process of the first aspect, as presented in the appended claims. The assembly may further comprise a mixer for mixing water with food powder.

The heat treatment unit may be an ultra high temperature (UHT) heat treatment unit.

The mixer may be connected to a vacuum source, for removing air from a mixing tank of the mixer.

A deaerator may be arranged between the storage tank and the blending unit.

The mixer may be a high-shear mixer.

An additional unit may be arranged in connection with the blending unit, for in-line injection of additives.

At least one of the units for in-line injection of fat and additional water may comprise a positive displacement pump, such as a piston pump, for accurate dosing.

### Brief description of the drawings

The present invention will be more readily understood when read in conjunction with the appended drawings, in which
Fig. 1 is a schematic representation of a process for recombining milk according to prior art,
Fig. 2 is a schematic representation of a process for recombining milk according to one embodiment, and
Fig. 3 is a schematic representation of an assembly for carrying out the process according to one embodiment.

### Detailed description

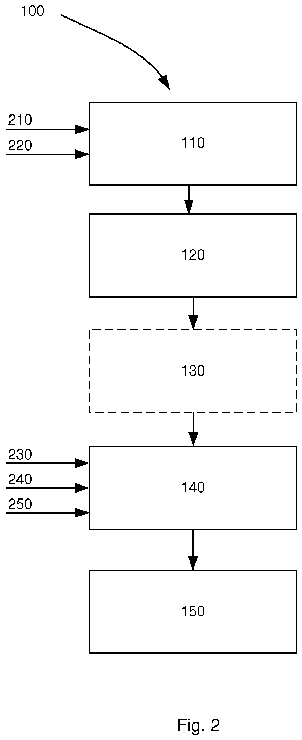

The process of the present invention is shown schematically in Fig 2. The process 100 for the recombination of milk product from water and skim milk powder (SMP) starts with a first mixing step 110 in a vacuum mixer, such as Tetra Almix from Tetra Pak®, where water 210 is fed to the vacuum mixer at ambient pressure. The skim milk powder 220 is then fed into the vacuum mixer when the operational water level and the desired vacuum pressure are achieved. Under the vacuum pressure, a preset amount of milk powder is transferred into the vacuum vessel, under strong shear from a mixing head inside the vessel, until a milk solid content of about 30-50% is achieved.

This will form a well mixed slurry with a milk solid content of 30% to 50%. When all the milk powder has been added, the vacuum mixer will perform a soft shearing action of the slurry at a low vacuum pressure, with the aim to remove air absorbed in the milk powder (the milk powder contains approximately the same volume of air as volume of powder). The vacuum pressure will be applied until such time that the air content is reduced to a minimum (approx 20 minutes).

Optionally, this first step can be performed off-line, and the process then starts with providing a ready-mixed slurry of high solid content (30% to 50% by weight).

Upon completion of the above mixing step, the slurry is pumped with a high capacity pump to one or several intermediate buffer tanks, in a storage step 120. The function of the buffer tanks is to supply a continuous supply of slurry to the subsequent units. Product from the buffer tanks can be fed directly to the standardisation unit upon end of the transfer from the vacuum mixer. The slurry could optionally also stay in the tanks for a certain minimum time, for hydration of the skim milk powder.

The slurry is optionally deaerated in a deaeration step 130 where it is maintained at the mixing temperature of some 50 °C. This will, in some cases, facilitate a further reduction of any air remaining in the slurry.

The next step is a blending or standardisation step 140 where an in-line injection of water 230 is added to the slurry together with fat 240 and any other additives 250, if desired. All the ingredients are added through an in-line shearing injection unit, emulsifying the blended or standardised product into an almost homogenous liquid. One such type of in-line injection unit is the Tetra Alfast from Tetra Pak®.

Subsequently, the finished milk product is sterilised in a sterilisation step 150 of ultra high temperature (UHT) heat treatment, before being sent to an aseptic filling machine for filling. This sterilisation step 150 efficiently sterilises the milk product, for achieving long shelf life when aseptically filled and packaged in the filling machine. Optionally, the sterilised milk product can be stored in an aseptic tank, for later processing or packaging. The UHT heat treatment can be performed in a Tetra Therm Aseptic Flex or Tetra Therm Aseptic VTIS, both from Tetra Pak®. Other downstream steps are also possible, such as filtration, homogenization etc. in order to prepare a milk product of desired quality.

One of the benefits of the present invention is that the process is continuous after the storage step 120 in storage tanks. This greatly enhances the speed of the process, and reduces the need for additional pasteurisation for preservation of the product.

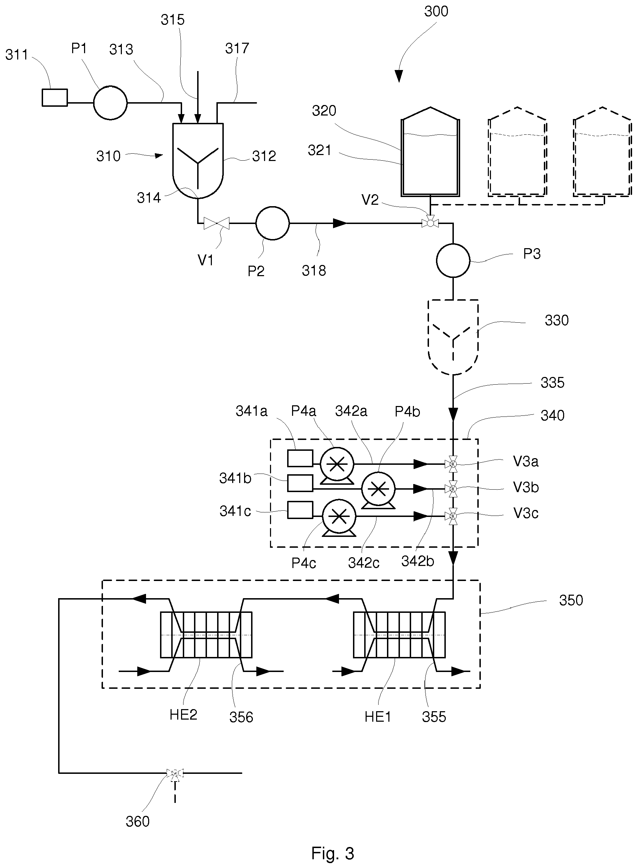

In Fig 3 an example of an assembly 300 for recombining a milk product according to the above process is shown. The assembly comprises a vacuum mixer 310 which is provided with a high shear mixer in a mixing head 314 in the bottom of a mixing vessel 312. Skim milk powder is added to the mixing vessel from tank 311 through pipe 313 via pump P1. Water is added through pipe 315. The mixing vessel 312 is further supplied with a vacuum pressure via pipe 317, which is connected to a vacuum source (not shown). The mixing head 314 is driven at a low speed during the deaeration phase of the mixing step. After completion of the mixing step, the bottom valve V1 of the mixer 310 leads the milk slurry from the tank towards a buffer tank 320 through pipe 318 with the use of pump P2. Several buffer tanks may be arranged in parallel, in order to ensure continuous operation, downstream of the buffer or storage tank 320.

The buffer tank 320 has an inner jacket 321, allowing a heating medium to be supplied between the jacket and the outer shell. After being stored in the buffer tank 320, valve V2 is opened, leading the slurry to the optional deaerator 330, shown with dashed lines, via pump P3. The deaerator removes a part of the remaining air in the slurry.

The blending unit 340 comprises, in the shown example, three similar parallel lines, each line comprising a tank 341a, 341b, 341c, a pump P4a, P4b, P4c, and a pipe 342a, 342b, 342c.

The upper line 341a, P4a, 342a delivers fat from a heated tank 341a via pump P4a through pipe 342a leading the fat into a mixing valve V2a.

The line for additional water 341b, P4b, 342b is connected to a mixing valve V2b, and an optional line for injection additives 341c, P4c, 342c is connected to valve V2c.

In this way, the previous slurry of 30-50% by weight of milk solids is now standardised to a desired milk solid content, with desired fat content and with optional additives, e.g. taste substances. The pumps P4a, P4b, P4c for in-line injecting the added substances need to be rather accurate. The pump type can e.g. be a positive displacement proportioning pump, such as a piston pump or a mechanically powered diaphragm pump. This permits accurate dosing of the added substances.

The thus recombined milk product is thereafter pumped through a UHT heat treatment unit 350, shown schematically in Fig. 3. The UHT heat treatment unit typically may comprise two heat exchangers HE1, HE2, where the first heat exchanger HE1 is connected to a heating source (such as steam) 355, for bringing the milk product to a very high temperature, typically > 137 °C. This high temperature is only held for a couple of seconds, not to change the properties too much of the milk product, and is thereafter cooled in the second heat exchanger HE2, being connected to a cooling source 356. The milk is now sterilised and can be pumped onwards to aseptic storage, in an aseptic tank (not shown), or to an aseptic filling machine, to be packed in aseptic packages. The heat treatment unit 350 can be another type of heat treatment unit, e.g. a pasteuriser, and it can also be a unit for direct heating with steam injection, with subsequent flash cooling by expansion of the steam in low pressure, according to well-known techniques.

With the process and assembly of the current invention, a very concentrated milk slurry is mixed and deaerated. By having a more concentrated milk slurry, less energy is required for heating and cooling later in the process. Further a much smaller buffer/storage tank is required for the storage. By preparing a more concentrated slurry at the initial stage of the process, the flexibility of the line increases as well.

The in-line blending of all ingredients can be obtained with a very high dosing accuracy, with savings on ingredients and energy. Furthermore, on line change of recipe/product can be obtained in conjunction with the automation of the remaining heat treatment and filling equipment.

The above assembly and process is described for the recombination of a milk product. However, the same general principles apply for the recombination of similar products that are made from a solid powder as the base material. Such products are e.g. soy milk, oat milk, certain soups, sauces, custards and fruit or vegetable drinks. In spirit with the invention, these products can also be re-combined by first making or providing a slurry with a high content of solids, with subsequent continuous standardisation and heat treatment, storing etc., in accordance with the invention. It is also possible to use the process and assembly of the invention for producing other dairy products containing milk, such as lactic acid drinks and similar.

The detailed description shows how to prepare a slurry of high solid content. It is however possible to start the process with a ready-made slurry of high solid content, without deviating from the main features of the invention.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. Process (100) for recombining a liquid food product, comprising the steps of
- providing a slurry of food solids, said slurry being prepared by mixing (110) food powder with water,
- blending (130) the slurry by in-line injection of water (230), and
- heat treating (140) the recombined liquid food product,
wherein the blending step (130) and heat treatment step (140) are continuous and wherein the mixing step (110) is performed in the presence of a vacuum, for simultaneous deaeration of the food product being mixed.

2. Process (100) according to claim 1, wherein the slurry comprises more than 30 percent by weight of food solids.

3. Process (100) according to any one of the preceding claims, wherein fat and/or other additives are added by in-line injection (250) in connection with the blending step (130).

4. Process (100) according to any one of the preceding claims, further comprising a deaeration step prior to the blending step.

5. Process according to any one of the preceding claims, wherein the mixing step (110) is carried out at a temperature of between 35 °C and 55 °C, and the storing step (120) is carried out at a temperature of between 40 °C and 60 °C.

6. Process according to any one of the preceding claims, wherein the food solids are skim milk powder.

7. Assembly (300) for recombining a food product according to the process according to any one of the preceding claims, comprising
- a storage tank (310) for receiving a mixed food slurry,
- a blending unit (330) for in-line injection of water, and
- a heat treatment unit (340),
wherein the blending unit (330) and the heat treatment unit (340) are configured to be operated continuously and wherein the mixer (320) is connected to a vacuum source, for removing air from a mixing tank of the mixer (320)..

8. Assembly (300) according to claim 8, further comprising a mixer (320) for mixing water with food powder.

9. Assembly according to any one of the claims 8 to 9, wherein the heat treatment unit (340) is an ultra high temperature heat treatment unit.

10. Assembly according to any one of the claims 8 to 11, wherein a deaerator is arranged between the storage tank (310) and the blending unit (330).

11. Assembly according to any one of the claims 8 to 12, wherein the mixer (320) is a high-shear mixer.

12. Assembly according to any one of the claims 8 to 13, wherein an additional unit (331c, P4c, 332c) is arranged in connection with the blending unit (330), for in-line injection of additives.

13. Assembly according to any one of the claims 8 to 14, wherein at least one of the units (331a, P4a, 332a; 331b, P4b, 332b) for in-line injection of fat and additional water comprises a positive displacement pump, such as a piston pump, for accurate dosing.

## Patentansprüche

1. Verfahren (100) zur Rekombination eines flüssigen Nahrungsmittelprodukts, umfassend die Schritte:
- Bereitstellen einer Aufschlämmung von Nahrungsmittelfeststoffen, wobei die Aufschlämmung durch Mischen (110) von Nahrungsmittelpulver mit Wasser hergestellt wird,
- Vermengen (130) der Aufschlämmung durch Inline-Einspritzung von Wasser (230), und
- Wärmebehandlung (140) des rekombinierten flüssigen Nahrungsmittelprodukts,
wobei der Vermengungsschritt (130) und der Wärmebehandlungsschritt (140) kontinuierlich sind, und wobei der Mischschritt (110) in Anwesenheit von Vakuum durchgeführt wird, um das Nahrungsmittel, welches gemischt wird, gleichzeitig zu entlüften.

2. Verfahren (100) nach Anspruch 1, wobei die Aufschlämmung mehr als 30 Gew.% Nahrungsmittelfeststoffe umfasst.

3. Verfahren (100) nach einem der vorhergehenden Ansprüche, wobei Fett und/oder sonstige Zusätze durch Inline-Einspritzung (250) in Verbindung mit dem Vermengungsschritt (130) zugefügt wird bzw. werden.

4. Verfahren (100) nach einem der vorhergehenden Ansprüche, ferner umfassend einen Entlüftungsschritt vor dem Vermengungsschritt.

5. Verfahren nach einem der vorhergehenden Ansprüche, wobei der Mischschritt (110) bei einer Temperatur zwischen 35 °C und 55 °C durchgeführt wird und der Aufbewahrungschritt (120) bei einer Temperatur zwischen 40 °C und 60 °C durchgeführt wird.

6. Verfahren nach einem der vorhergehenden Ansprüche, wobei die Nahrungsmittelfeststoffe Magermilchpulver sind.

7. Anordnung (300) zur Rekombination eines Nahrungsmittelprodukts nach dem Verfahren gemäß einem der vorhergehenden Ansprüche, umfassend:
- einen Aufbewahrungstank (310), um eine gemischte Nahrungsmittelaufschlämmung aufzunehmen,
- eine Vermengungseinheit (330) zur Inline-Einspritzung von Wasser, und
- eine Wärmebehandlungseinheit (340),
wobei die Vermengungseinheit (330) und die Wärmebehandlungseinheit (340) so ausgestaltet sind, dass sie kontinuierlich betrieben werden, und wobei der Mischer (320) mit einer Vakuumquelle verbunden ist, um Luft aus einem Mischtank des Mischers (320) zu entfernen.

8. Anordnung (300) nach Anspruch 8, ferner umfassend einen Mischer (320), um Wasser mit Nahrungsmittelpulver zu mischen.

9. Anordnung nach einem der Ansprüche 8 bis 9, wobei die Wärmebehandlungseinheit (340) eine Wärmebehandlungseinheit mit ultrahoher Temperatur ist.

10. Anordnung nach einem der Ansprüche 8 bis 11, wobei ein Entlüfter zwischen dem Aufbewahrungstank (310) und der Vermengungseinheit (330) angeordnet ist.

11. Anordnung nach einem der Ansprüche 8 bis 12, wobei der Mischer (320) ein Mischer mit hoher Scherung ist.

12. Anordnung nach einem der Ansprüche 8 bis 13, wobei eine zusätzliche Einheit (331c, P4c, 332c) zur Inline-Einspritzung von Zusätzen in Verbindung mit der Vermengungseinheit (330) angeordnet ist.

13. Anordnung nach einem der Ansprüche 8 bis 14, wobei mindestens eine der Einheiten (331a, P4a, 332a; 331b, P4b, 332b) zur Inline-Einspritzung von Fett und zusätzlichem Wasser zur genauen Dosierung eine Verdrängerpumpe umfasst, wie eine Kolbenpumpe.

## Revendications

1. Procédé (100) destiné à recombiner un produit alimentaire liquide, comprenant les étapes consistant à
- se procurer une bouillie de matières solides alimentaires, ladite bouillie étant préparée en malaxant (110) de la poudre alimentaire avec de l'eau,
- mélanger (130) la bouillie par injection en ligne d'eau (230), et
- traiter thermiquement (140) le produit alimentaire liquide recombiné,
dans lequel l'étape de mélange (130) et l'étape de traitement thermique (140) sont continues et dans lequel l'étape de malaxage (110) est effectuée en présence d'un vide, pour une désaération simultanée du produit alimentaire en train d'être malaxé.

2. Procédé (100) selon la revendication 1, dans lequel la bouillie comprend plus de 30 pour cent en poids de matières solides alimentaires.

3. Procédé (100) selon l'une quelconque des revendications précédentes, dans lequel de la matière grasse et/ou d'autres additifs sont ajoutés par injection en ligne (250) en relation avec l'étape de mélange (130).

4. Procédé (100) selon l'une quelconque des revendications précédentes, comprenant en outre une étape de désaération avant l'étape de mélange.

5. Procédé selon l'une quelconque des revendications précédentes, dans lequel l'étape de malaxage (110) est réalisée à une température comprise entre 35 °C et 55 °C, et l'étape de stockage (120) est réalisée à une température comprise entre 40 °C et 60 °C.

6. Procédé selon l'une quelconque des revendications précédentes, dans lequel les matières solides alimentaires sont du lait écrémé en poudre.

7. Ensemble (300) destiné à recombiner un produit alimentaire selon le procédé selon l'une quelconque des revendications précédentes, comprenant
- une cuve de stockage (310) destinée à recevoir une bouillie alimentaire malaxée,
- une unité de mélange (330) pour l'injection en ligne d'eau, et
- une unité de traitement thermique (340),
dans lequel l'unité de mélange (330) et l'unité de traitement thermique (340) sont configurées pour fonctionner en continu et dans lequel le malaxeur (320) est raccordé à une source de vide, pour retirer l'air d'une cuve de malaxage du malaxeur (320).

8. Ensemble (300) selon la revendication 8, comprenant en outre un malaxeur (320) destiné à malaxer de l'eau avec de la poudre alimentaire.

9. Ensemble selon l'une quelconque des revendications 8 à 9, dans lequel l'unité de traitement thermique (340) est une unité de traitement thermique à ultrahaute température.

10. Ensemble selon l'une quelconque des revendications 8 à 11, dans lequel un désaérateur est disposé entre la cuve de stockage (310) et l'unité de mélange (330).

11. Ensemble selon l'une quelconque des revendications 8 à 12, dans lequel le malaxeur (320) est un malaxeur à fort cisaillement.

12. Ensemble selon l'une quelconque des revendications 8 à 13, dans lequel une unité supplémentaire (331c, P4c, 332c) est disposée en relation avec l'unité de mélange (330), pour l'injection en ligne d'additifs.

13. Ensemble selon l'une quelconque des revendications 8 à 14, dans lequel au moins une des unités (331a, P4a, 332a ; 331b, P4b, 332b) pour l'injection en ligne de matière grasse et d'eau supplémentaire comprend une pompe volumétrique, telle qu'une pompe à piston, pour un dosage précis.
